# EUROPÄISCHE PATENTANMELDUNG

(11) **EP 2 083 187 A1**
(43) Veröffentlichungstag der Anmeldung: **29.07.2009**
(21) Anmeldenummer: 09000336.9
(22) Anmeldetag: 13.01.2009
(51) Int. Cl.: F16D 65/092, F16D 65/14

(54) **Scheibenbremse für ein Nutzfahrzeug und Bremsbelag für eine Scheibenbremse**

(30) Priorität: 22.01.2008 DE 102008005432
(71) Anmelder: KNORR-BREMSE Systeme für Nutzfahrzeuge GmbH, 80809 München (DE)
(72) Erfinder: Camilo-Martinez, José, 82008 Unterhaching (DE); Klingner, Matthias, 82272 Moorenweis (DE); Kempinger, Georg, 81827 München (DE); Raffin, Christian, 85630 Grasbrunn (DE)
(74) Vertreter: Mattusch, Gundula

(57) **Zusammenfassung**

Eine Scheibenbremse für ein Nutzfahrzeug, mit einem eine Bremsscheibe übergreifenden Bremssattel und mit Bremsbelägen (1), die die Bremsscheibe in Funktionsstellung kontaktieren, wobei mindestens ein Bremsbelag (1) mit einer Belagträgerplatte (2) und einem daran befestigten Reibbelag (3) durch eine Zuspanneinrichtung über zumindest eine im Bremssattel gelagerte Stellspindel und ein damit in Wirkverbindung stehendes Druckstück (4) an die Bremsscheibe andrückbar ist, ist so ausgebildet, dass die Druckfläche (5) des Druckstücks (4) mit Vertiefungen versehen ist.

## Beschreibung

Die Erfindung betrifft eine Schreibenbremse für ein Nutzfahrzeug nach dem Oberbegriff des Anspruchs 1 sowie einen Bremsbelag für eine Scheibenbremse.

Betriebsbedingt sind solche Scheibenbremsen ebenso wie deren Bremsbeläge, die jeweils aus einer Belagträgerplatte und einem daran befestigten Reibbelag bestehen, einer außerordentlich hohen thermischen Belastung ausgesetzt, d.h., die beim Bremsen entstehende Reibwärme strahlt beispielsweise über die Belagträgerplatte hin zu im Bremssattel integrierten Bauteilen, die hierdurch beschädigt werden können.

Als besonders wärmeempfindliche Bauteile sind vor allem Dichtelemente aus Kunststoff zu nennen, deren Standzeit durch die thermische Belastung erheblich beeinträchtigt wird. Aber auch Faltenbälge, mit denen der Austrittsbereich der Stellspindeln gegenüber dem Bremssattel abgedichtet ist, werden auf die genannte Art und Weise in Mitleidenschaft gezogen, so dass deren Funktion, nämlich das Eindringen von Schmutz in den Austrittsbereich der Stellspindeln zu verhindern, dauerhaft beeinträchtigt ist.

Um die beim Bremsen hohen wirksamen Kräfte übertragen zu können, werden die Druckstücke sehr massiv ausgeführt, wodurch sich neben einer materialbedingten Wärmeleitung eine Wärmespeicherung ergibt, durch die sich insbesondere bei kurzen Bremsintervallen, wie sie häufig im Betrieb auftreten, die beschriebenen Probleme verstärkt ergeben.

Um die Betriebssicherheit der Scheibenbremse dauerhaft zu gewährleisten, sind Wartungsarbeiten in relativ kurzen Zeitabständen erforderlich, bei denen durch die thermische Belastung hochbeanspruchte Bauteile ausgetauscht, zumindest jedoch überprüft werden müssen.

Naturgemäß sind solche Wartungsarbeiten, vor allem aber die belastungsbedingten notwendigen Auswechselungen der Bauteile mit erheblichen Kosten verbunden, sowohl hinsichtlich deren Beschaffung wie auch der Montage bzw. Demontage und der notwendigen Stillstandszeit des Fahrzeuges.

Aus der DE 103 02 334 A1 ist eine Scheibenbremse bzw. ist ein Bremsbelag bekannt, mit fest mit der Belagträgerplatte verbundenen Druckstücken, vorzugsweise durch eine einstückige Ausbildung.

Daneben sind Scheibenbremsen im Einsatz (DE 94 22 342 U1), bei denen die Stellspindeln die Druckstücke tragen, d.h., die Druckfläche des Druckstücks ist hierbei durch die Kontaktfläche mit der Belagträgerplatte gebildet, während bei der einstückigen Ausbildung der Druckstücke mit der Belagträgerplatte die Druckfläche im Anlagebereich mit der Stellspindel gegeben ist.

Der Erfindung liegt die Aufgabe zugrunde, eine Scheibenbremse der gattungsgemäßen Art sowie einen Bremsbelag für die Scheibenbremse so weiterzuentwickeln, dass deren Funktionsfähigkeit dauerhaft sicherer wird und die Betriebskosten gesenkt werden.

Diese Aufgabe wird durch eine Scheibenbremse mit den Merkmalen des Anspruchs 1 und einen Bremsbelag mit den Merkmalen des Anspruchs 8 gelöst.

Die Erfindung, die sich im Übrigen ohne Mehrkosten gegenüber dem Stand der Technik realisieren lässt, führt zu einer erheblichen Reduzierung der Wärmeleitung in den Bremssattel bzw. zu den funktionsrelevanten Teilen im Innern des Bremssattels, so dass diese entsprechend geringer thermisch belastet werden. Daraus ergibt sich neben einer kostenreduzierenden Erhöhung der Standzeit dieser Funktionsteile auch eine Verschleißminderung der Bremsbeläge sowie der Bremsscheibe.

Durch die Anordnung der Vertiefungen, bevorzugt in Form von nach außen offenen Kühlkanälen, erfolgt eine bessere Hinterlüftung des Druckstücks, wobei die Wärme beispielsweise durch Konvektion an die Umgebung abgegeben wird. Daneben dient die Luft in den Vertiefungen als Isolator, wodurch gleichfalls eine Reduzierung der Wärmebelastung erreicht wird. Durch eine gezielte Formgebung bzw. Führung der Vertiefungen, insbesondere der Kühlkanäle, kann die Effizienz der Kühlung noch gesteigert werden.

Diese Maßnahmen führen auch zu einer Verschleißminderung der Bremsbeläge und der Bremsscheibe sowie des sogenannten Fadings, einem unerwünschten Nachlassen der Bremswirkung durch Wärme, was ebenfalls zu einer Verbesserung der Funktionsfähigkeit der Scheibenbremse beiträgt.

In fertigungstechnischer Hinsicht bietet die Erfindung den Vorteil, dass durch die Vertiefungen bei der notwendigen spanenden Bearbeitung der Druckstücke, d.h. der Druckflächen, die Spanmenge reduziert wird. Insoweit ist der Materialeinsatz verringert, woraus sich naturgemäß gleichfalls Kostenvorteile ergeben.

Dabei ist es prinzipiell unerheblich, ob die Druckstücke als Einzelteile oder einstückig mit der Belagträgerplatte des Bremsbelages hergestellt werden. Üblicherweise sind die Druckstücke und ggf. die Belagträgerplatte als Gussteile ausgebildet.

Weitere vorteilhafte Ausbildungen der Erfindung sind in den Unteransprüchen gekennzeichnet.

Ein Ausführungsbeispiel eines erfindungsgemäßen Bremsbelages wird nachfolgend anhand der beigefügten Zeichnungen beschrieben.

Es zeigen:

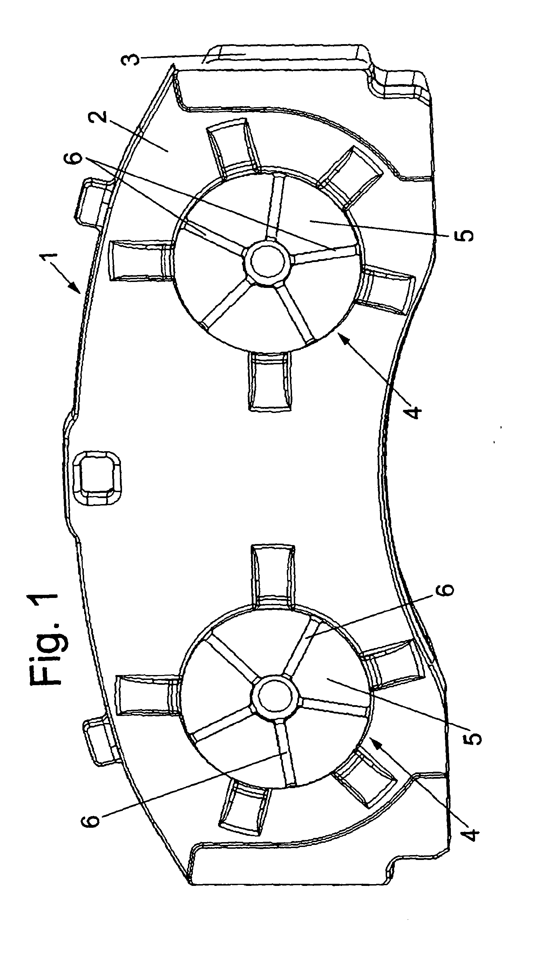

- Figur 1: einen Bremsbelag nach der Erfindung in einer Rückansicht

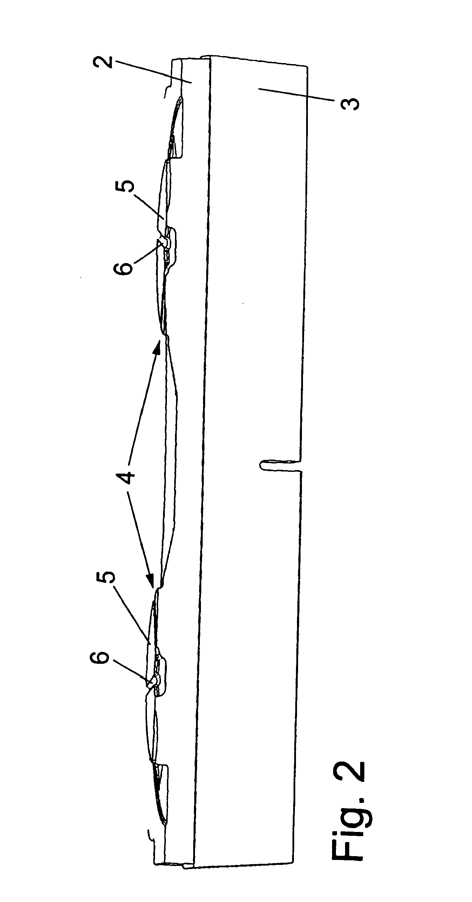

- Figur 2: den Bremsbelag in einer Draufsicht.

In den Figuren ist ein insgesamt mit dem Bezugszeichen 1 versehener Bremsbelag für eine Schreibenbremse eines Nutzfahrzeuges dargestellt, der eine Belagträgerplatte 2 sowie einen daran befestigten Reibbelag 3 aufweist.

Dieser Reibbelag 3 wird bei einer Bremsung gegen eine nicht dargestellte Bremsscheibe gepresst, wozu an der dem Reibbelag 3 abgewandten Rückseite der Belagträgerplatte 2 Stellspindeln angreifen, die Bestandteil einer Zuspanneinrichtung sind.

Im vorliegenden Beispiel sind an der Rückseite der Belagträgerplatte 2 Druckstücke 4 angeformt, die jeweils eine Druckfläche 5 aufweisen, an denen die genannten Stellspindeln Zuspanndruck übertragend anliegen.

Erfindungsgemäß ist die jeweilige Druckfläche 5 des Druckstücks 4 mit Vertiefungen versehen, im Beispiel in Form von radial verlaufenden, nach außen hin offenen Kühlkanälen 6, wobei diese Kühlkanäle 6 in gleichem Winkelabstand zueinander angeordnet sind.

Selbstverständlich besteht auch die Möglichkeit, die Kühlkanäle 6 in einer anderen Konfiguration einzubringen, wobei bei einer einstückigen Ausbildung der Belagträgerplatte 2 und der Druckstücke 4 die Kühlkanäle 6, bzw. die Vertiefungen beim Gießen mit eingebracht werden können.

## Patentansprüche

1. Scheibenbremse für ein Nutzfahrzeug, mit einem eine Bremsscheibe übergreifenden Bremssattel und mit Bremsbelägen (1), die die Bremsscheibe in Funktionsstellung kontaktieren, wobei mindestens ein Bremsbelag (1) mit einer Belagträgerplatte (2) und einem daran befestigten Reibbelag (3) durch eine Zuspanneinrichtung über zumindest eine im Bremssattel gelagerte Stellspindel und ein damit in Wirkverbindung stehendes Druckstück (4) an die Bremsscheibe andrückbar ist, **dadurch gekennzeichnet, dass** die Druckfläche (5) des Druckstücks (4) mit Vertiefungen versehen ist.

2. Scheibenbremse nach Anspruch 1, **dadurch gekennzeichnet, dass** die Vertiefungen als Kühlkanäle (6) ausgebildet sind.

3. Scheibenbremse nach Anspruch 1 oder 2, **dadurch gekennzeichnet, dass** die Kühlkanäle (6) nach außen hin offen sind.

4. Scheibenbremse nach einem der vorhergehenden Ansprüche, **dadurch gekennzeichnet, dass** die Kühlkanäle (6) radial verlaufend angeordnet sind.

5. Scheibenbremse nach einem der vorhergehenden Ansprüche, **dadurch gekennzeichnet, dass** die Kühlkanäle (6) in gleichem Winkelabstand zueinander angeordnet sind.

6. Scheibenbremse nach einem der vorhergehenden Ansprüche, **dadurch gekennzeichnet, dass** die Vertiefungen bei einstückig mit der Belagträgerplatte (2) ausgebildeten Druckstücken (4) vorgesehen sind.

7. Scheibenbremse nach einem der vorhergehenden Ansprüche, **dadurch gekennzeichnet, dass** die Vertiefungen in separaten, mit jeweils einer zugeordneten Stellspindel verbundenen Druckstücken (4) angeordnet sind.

8. Bremsbelag für eine Scheibenbremse, mit einer Belagträgerplatte (2) und einem daran befestigten Reibbelag (3) sowie mindestens einem, auf der dem Reibbelag (3) abgewandten Rückseite der Belagträgerplatte (2) angeformten Druckstück (4), **dadurch gekennzeichnet, dass** das Druckstück (4) auf seiner Druckfläche mit Vertiefungen versehen ist.

9. Bremsbelag nach Anspruch 8, **dadurch gekennzeichnet, dass** die Vertiefungen als Kühlkanäle (6) ausgebildet sind.

10. Bremsbelag nach Anspruch 8 oder 9, **dadurch gekennzeichnet, dass** die Kühlkanäle (6) nach außen offen sind.
